(19) Europäisches Patentamt
European Patent Office
Office européen des brevets

(11) Veröffentlichungsnummer: **0 121 660**
**B1**

(12) # EUROPÄISCHE PATENTSCHRIFT

(45) Veröffentlichungstag der Patentschrift: **20.04.88**

(51) Int. Cl.⁴: **C 01 B 15/017**

(21) Anmeldenummer: **84100839.4**

(22) Anmeldetag: **27.01.84**

(54) **Verfahren zur Herstellung nichtwässriger Wasserstoffperoxidlösungen.**

(30) Priorität: **11.03.83 DE 3308740**

(43) Veröffentlichungstag der Anmeldung: **17.10.84 Patentblatt 84/42**

(45) Bekanntmachung des Hinweises auf die Patenterteilung: **20.04.88 Patentblatt 88/16**

(84) Benannte Vertragsstaaten: **AT BE CH DE FR GB IT LI LU NL SE**

(56) Entgegenhaltungen:
**DE - A - 3 225 307**
**DE - B - 2 125 159**
**DE - C - 2 038 319**
**DE - C - 2 038 320**

(73) Patentinhaber: **Degussa Aktiengesellschaft, Weissfrauenstrasse 9, D-6000 Frankfurt am Main 1 (DE)**

(72) Erfinder: **Drauz, Karlheinz, Dr. Dipl.-Chem., Flurstrasse 5, D-6463 Freigericht 1 (DE)**
Erfinder: **Kleemann, Axel, Dr. Dipl.-Chem., Greifenhagenstrasse, D-6450 Hanau 9 (DE)**
Erfinder: **Wirthwein, Rolf, Dr. Dipl.-Chem., Fürstenbergstrasse, D-6450 Hanau 9 (DE)**

**EP 0 121 660 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Es ist bekannt, dass der Wassergehalt von Wasserstoffperoxidlösungen bei vielen Reaktionen, z.B. bei Oxydationen oder Epoxidationen, störend ist, s. z.B. Org. Reactions 7, 395 (1953).

So wurde schon früh versucht, anstelle von rein wässrigen Lösungen von Wasserstoffperoxid entsprechende organische Lösungen einzusetzen.

Bei der Herstellung derartiger Lösungen zeigten sich jedoch Schwierigkeiten: Im allgemeinen werden zur Gewinnung organischer Wasserstoffperoxidlösungen wässrige Lösungen von Wasserstoffperoxid als Ausgangsmaterial eingesetzt und entweder mit der gewünschten organischen Verbindung nur vermischt und anschliessend durch Destillation entwässert, oder aber die wässrigen Lösungen wurden mit der organischen Verbindung extrahiert und gegebenenfalls entwässert.

In beiden Fällen wurden zwar organische Lösungen von Wasserstoffperoxid erhalten, deren Wassergehalt aber stets bei ungefähr 1 Gew.% oder mehr lag, siehe z.B. DE-PS 2 038 319 und DE-PS 2 038 320, sowie US-PS 3 743 706; GB-PS 931 119.

Dabei wurde nach den Verfahren der DE-PS 2 038 319 und 2 038 320 versucht, das in den organischen Lösungen vorhandene Wasser durch Destillation bei vermindertem Druck, oder gefolgt durch azeotrope Destillation mit einem zusätzlichen Schleppmittel zu entfernen.

Beim Verfahren der US-PS 3 743 706 sollte das Extraktionsmittel selbst als Schleppmittel für eine Azeotropdestillation benutzt werden können. Nähere Einzelheiten fehlen aber.

Auch in der GB-PS 931 119 wurde der Mischungspartner zum azeotropen Abdestillieren des Wassers eingesetzt. Nun zeigte sich aber bei der Herstellung organischer Wasserstoffperoxidlösungen aus wässrigen Lösungen neben dem oftmals zu hohen Gehalt an Wasser noch ein weiterer wesentlicher Nachteil:

Während der Wasserentfernung bei den dort verwendeten Drucken wurde ein bestimmter Prozentsatz an Wasserstoffperoxid mit dem Destillat herausgeschleppt, die bei der Nacharbeitung zwischen 0,5 und 0,6 Gew.% lagen.

Ausserdem traten weitere Verluste durch Zersetzung im Sumpf auf.

Bei den Verfahren der DE-PS 2 038 319 und 2 038 320 wurden organische Phosphorverbindungen bzw. heterocyclische Stickstoffverbindungen eingesetzt, bei den Verfahren der GB-PS 931 119 und US-PS 3 743 706 aliphatische oder cycloaliphatische Ester.

Während in der US-PS 3 743 706 keine Angaben über die Durchführung einer Azeotropdestillation vorhanden sind, wird bei den Verfahren der anderen drei genannten Patentschriften bei Drucken weit unter 100 mbar gearbeitet, siehe die Beispiele.

In der DE-AS 2 125 159 werden Wasserstoffperoxidlösungen in niedriger siedenden Lösungsmitteln in mehreren Stufen hergestellt. Nach der Extraktion des wässrigen Wasserstoffperoxides mit Hochsiedern wird der anfallende Extrakt zum Teil entwässert, bevorzugt mit Hilfe eines Dünnschichtverdampfers, worauf aus dem anfallenden Destillationssumpf in einem weiteren Dünnschichtverdampfer das Wasserstoffperoxid unter Zugabe eines leichter als das Extraktionsmittel siedenden Lösungsmittels total verdampft wird.

Hierbei treten zwangsläufig empfindliche Wasserstoffperoxidverluste auf, und zwar auch schon in der Entwässerungsstufe. Auch lag der Wassergehalt der Lösungen zum Teil recht hoch.

Das Gleiche zeigte sich bei den Verfahren der DE-PS 2 038 319 und 2 038 320, bei denen die Wasserstoffperoxidverluste ins Gewicht fielen, und, abgesehen davon, die erhaltenen Wasserstoffperoxidlösungen in den Hochsiedern nicht wasserfrei waren.

Zwar wurde in den beiden deutschen Patentschriften ganz allgemein ein Druckbereich genannt, der unterhalb 400 mbar lag, beim Nacharbeiten mit Triäthylphosphat bzw. N-Methylpyrrolidon jedoch bei Drucken von 400 bzw. 100 mbar wurden in Destillaten Wasserstoffperoxidmengen von 0,28 bzw. 0,6 Gew.% und 0,26 bzw. 0,8 Gew.%, in beiden Fällen bezogen auf das Destillat, gefunden; ausserdem trat ein zusätzlicher Verlust an Wasserstoffperoxid von 7,5 bzw. 4,1 Gew.% und 4,7 bzw. 3,9 Gew.%, bezogen auf das eingesetzte Wasserstoffperoxid, auf. Rechnet man die durch die Destillatmenge ausgetragene und durch die Zersetzung verlorene Wasserstoffperoxidmenge zusammen, so lagen bei einer Destillation bei 400 bzw. 100 mbar die Gesamtverluste bei mindestens 7–8 Gew.% an eingesetztem Wasserstoffperoxid. Wird aber wesentlich tiefer, d.h.weit unter 100 mbar destilliert, so befinden sich erklärlicherweise noch weit höhere Mengen an Wasserstoffperoxid im Destillat, die bis über ein Gewichtsprozent, bezogen auf das Destillat, gehen können; bei diesen Drucken, die als bevorzugt gelten, werden aber die Beispiele durchgeführt, s. loc. cit.

Nach dem Stand der Technik musste daher der Eindruck entstehen, dass eine destillative Trocknung von organischen Wasserstoffperoxidlösungen, die mit einem Lösungsmittel hergestellt wurden, dessen eigener Siedepunkt bzw. der Siedepunkt eventueller Azeotrope, nahe oder oberhalb des Siedepunktes von Wasserstoffperoxid liegt, zwangsläufig erhebliche Verluste an Wasserstoffperoxid bei grosstechnischer Durchführung zur Folge hatte.

Wie gesagt, enthielten die anfallenden Lösungen auch im allgemeinen zu viel Wasser; so hatten die phosphororganischen Lösungen z.B. Restwassergehalte, die zwischen 0,97 bis 9,5 Gew.% lagen. Derartige Lösungen eignen sich aber schlecht für z.B. Hydroxylierungsverfahren.

Auch im einzelnen Beispiel in der DE-PS 2 038 320 war der Wassergehalt 11,4 Gew.% in der organischen Phase.

Es ist auch schon vorgeschlagen worden, praktisch wasserfreie organische Lösungen von Wasserstoffperoxid durch Vermischen mit Carbonsäureestern in der Weise herzustellen, dass man die wässrigen Wasserstoffperoxidlösungen mit Alkyl- oder Cycloaklylestern von gesättigten aliphatischen Carbonsäuren, die eine Gesamtkohlenstoffzahl von 4-8 besitzen und mit Wasser Azeotrope bilden, in Kontakt bringt und die azeotrope Entwässerung bei Drucken zwischen 160-1000 mbar durchführt, siehe DE Offenlegungsschrift 3 225 307.

Auf diese Weise werden organische Lösungen von Wasserstoffperoxid erhalten, deren Wassergehalt unterhalb 0,5 Gew.% liegt. Bei ihrer Herstellung tritt ausserdem praktisch kein Verlust an eingesetztem Wasserstoffperoxid auf.

Allerdings ist dieses Verfahren auf die obengenannten Carbonsäureester beschränkt. Es wäre nun aber wünschenswert, auch ein Verfahren zur Herstellung ähnlich wasserfreier Lösungen von Wasserstoffperoxid in höher siedenden organischen Lösungsmitteln zu besitzen.

Es wurde nun gefunden, dass man wasserfreie Lösungen von Wasserstoffperoxid in höher siedenden organischen Lösungsmitteln durch Mischen von Wasserstoffperoxid mit den höher siedenden Lösungsmitteln in stetiger Gegenwart von solchen organischen Lösungsmitteln, die ein oder mehrere Azeotrope mit Wasser bilden, deren Siedepunkte unterhalb des Siedepunktes von Wasserstoffperoxid liegen, bezogen auf Normaldruck, herstellen kann, wenn man das Wasser mit diesen tiefersiedenden Lösungsmitteln durch Azeotropbildung bei 50-400 mbar aus der Mischung bis auf 1 Gew.%, bevorzugt auf unterhalb 0,5 Gew.% entfernt.

Durch das erfindungsgemässe Verfahren ist es nun gelungen, durch stetige Anwesenheit eines niedriger siedenden Lösungsmittels und eines spziellen Vakuums während der Wasserentfernung, sowohl verlustfrei das Wasserstoffperoxid in hochsiedende organische Lösungsmittel zu überführen, als auch praktisch wasserarme Lösungen von Wasserstoffperoxid in den Hochsiedern zu erhalten.

Dies ist ein entscheidender technischer Fortschritt gegenüber dem Stand der Technik und war durch ihn nicht nahegelegt, da bisher nicht bekannt war, sowohl einen Verlust an Wasserstoffperoxid als auch einen ins Gewicht fallenden Gehalt an Wasser in den Lösungen zu vermeiden.

Unter höhersiedenden organischen Lösungsmitteln, die keine oder nur solche Azeotrope mit Wasser bilden, deren Siedepunkte bei Normaldruck nahe oder oberhalb des Siedepunktes von Wasserstoffperoxid liegen, werden einerseits Phosphorverbindungen verstanden mit der Formel

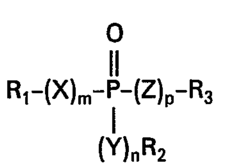

wobei X, Y und Z für ein O-Atom oder eine N-($C_1$-$C_8$)-Alkylgruppe bzw. für eine N-($C_4$-$C_7$)-Cycloalkylgruppe steht, ferner n, m und p die Zahl 0 oder 1 bedeuten, sowie $R_1$, $R_2$ und $R_3$ gradkettige oder verzweigte $C_1$-$C_8$-Alkyl- bzw. $C_4$-$C_6$-Cycloalkylreste darstellen, die gegebenenfalls durch Halogen, Hydroxyl-, $C_1$-$C_4$-Alkoxy, CN-, oder Phenylgruppen substituiert sein können.

Vor allem eignen sich Trialkylphosphate mit $C_1$-$C_8$-Alkylgruppen, bevorzugt Triäthylphosphat, zur Herstellung der erfindungsgemässen organischen Lösungen von Wasserstoffperoxid.

Auch Ester aromatischer Carbonsäuren mit der Strukturformel

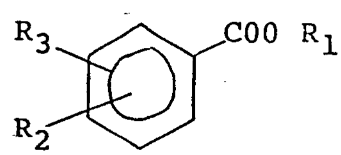

worin $R_1$ die Gruppierung $CH_3$, $C_2H_5$, n-$C_3H_7$, i-$C_3H_7$, n-$C_4H_9$, i-$C_4H_9$, tert. $C_4H_9$, sek. $C_4H_9$, $R_2$ und $R_3$ gegenüber Wasserstoffperoxid inerte Substituenten wie H, Cl, F, Alkyl wie $R_1$, $CH_3O$, $C_2H_5O$, COO $R_4(R_1=R_1)$ bedeuten und $R_2$ und $R_3$ in beliebigen Positionen zur COO $R_1$-Gruppierung stehen kann, eignen sich ausgezeichnet für die Erfindung. So erwiesen sich besonders Phthalsäureester, bevorzugt Phthalsäurediäthylester, als sehr günstig.

Ferner können Carbonsäureamide, resp. Lactame, der allgemeinen Formel

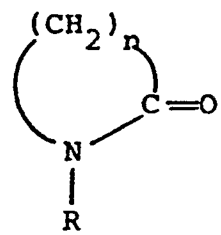

in der R einen gradkettigen oder verzweigten $C_1$-$C_4$ Alkylrest bedeutet, der gegebenenfalls durch Halogen, Hydroxyl- oder $C_1$-$C_3$-Alkylreste substituiert sein kann, und n die Zahl 2 bis 5 bedeutet, eingesetzt werden.

Sehr gute Ergebnisse wurden hier mit N-Alkylpyrolidonen mit $C_1$-$C_4$-Alkylgruppen, besonders mit N-Methylpyrolidon, erzielt.

Es stellt sich auch heraus, dass tetrasubstituierte Harnstoffe verwendet werden können mit der Formel

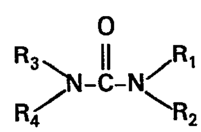

in der $R_1$, $R_2$, $R_3$ und $R_4$ $C_1$-$C_6$-Alkylgruppen bedeuten, wobei Harnstoffe, bei denen $R_1$, $R_2$, $R_3$ und $R_4$ einander gleich sind, bevorzugt verwendet werden.

Sehr gut erwiesen sich als höhersiedende Lösungsmittel Tetramethyl-, Tetraäthyl- und Tetrabutylharnstoff.

Wasserstoffperoxid kann in beliebig konzentrierten wässrigen Lösungen vorliegen, am besten eigneten sich Lösungen mit 3 bis 90 Gew.% Wasserstoffperoxid, bevorzugt 30–85 Gew.%.

Als Stabilisatoren können für Wasserstoffperoxid übliche Stabilisatoren, z.B. die in ULLMANN, Enzyklopädie der technischen Chemie, Bd. 17, 4. Aufl., Seite 709, genannten, eingesetzt werden.

Als organische Lösungsmittel, die ein oder mehrere Azeotrope mit Wasser bilden, deren Siedepunkte unterhalb des Siedepunktes von Wasserstoffperoxid bei Normaldruck liegen, kommen Äther, wie Dioxan, Diisopropyläther oder Methyl-tert.-butyläther in Frage; auch Dichlormethan und $C_5$–$C_8$ aliphatische Kohlenwasserstoffe sind verwendbar.

Bevorzugte Lösungsmittel dieses Typs sind aber Alkyl- oder Cycloalkylester von gesättigten, aliphatischen Carbonsäuren, die eine Gesamtkohlenstoffzahl von 4–8 besitzen, vor allem Essigsäure-n-propylester oder Essigsäure-i-propylester bzw. Essigsäureäthylester sowie auch Dichlormethan. Die Konzentration von Wasserstoffperoxid in den aliphatischen Carbonsäureestern liegt z.B. bei 3–60 Gew.%. In diesen niedrig siedenden Lösungsmitteln kann Wasserstoffperoxid gelöst zum Einsatz kommen, oder die wässrige Wasserstoffperoxidlösung wird – wie beschrieben – mit den niedrig siedenden und den höher siedenden Lösungsmitteln gemischt und darauf dann das azeotropbildende, niedrig siedende Lösungsmittel zusammen mit dem Wasser abdestilliert.

Wird Wasserstoffperoxid als Lösung in den oben beschriebenen niedrig siedenden Lösungsmitteln eingesetzt, so besitzen diese Lösungen einen Wassergehalt von höchstens 1 Gew.%, bevorzugt von unterhalb 0,5 Gew.%.

Die jeweils aus diesem Bereich speziell anzuwendenden Drucke variieren mit dem eingesetzten höher siedenden Lösungsmittel.

Die Menge des niedriger siedenden Lösungsmittels muss mindestens so gross bemessen werden, dass das gegebenenfalls eingeführte Wasser als Azeotrop mit diesem Lösungsmittel abdestilliert werden kann, so dass eine Lösung von Wasserstoffperoxid in dem höher siedenden Lösungsmittel mit höchstens 1 Gew.%, bevorzugt unterhalb 0,5 Gew.%, Wasser erhalten werden kann: Dies lässt sich durch einen Vorversuch leicht feststellen.

Dieses gegebenenfalls vorhandene Wasser kann ausser durch Verwendung wässriger Wasserstoffperoxidlösungen noch durch das höher siedende Lösungsmittel selbst eingeschleppt werden. Bei Verwendung organischer Wasserstoffperoxidlösungen braucht also das höher siedende Lösungsmittel nicht wasserfrei zu sein. Der Vorzug des erfindungsgemässen Verfahrens besteht auch darin, dass die erfindungsgemäss erhaltenen Lösungen, wenn sich deren Wassergehalt durch Zersetzung des Wasserstoffperoxids erhöht haben sollte, durch eine entsprechend dosierte Zugabe des niedriger siedenden Lösungsmittels wieder azeotrop entwässert werden kann.

Das Mischen der Wasserstoffperoxidlösung und der Lösungsmittel wird üblicherweise in Mischkesseln, bevorzugt mit Rührerausstattung, vorgenommen.

Das erfindungsgemässe Verfahren lässt sich in üblichen Verdampfern und Destillationsvorrichtungen, wie z.B. Füllkörper- und Bodenkolonnen, durchführen.

Als Werkstoffe kommen alle Materialien in Frage, die gegenüber Wasserstoffperoxid inert sind, wie z.B. Glas, Emaille, Aluminium, passivierter Edelstahl, bestimmte Kunststoffe.

Die Vorteile des erfindungsgemässen Verfahrens gelten auch gegenüber den Verfahren der DE-AS 2 462 957 und 2 462 990, bei denen Wasserstoffperoxid gemeinsam mit den umzusetzenden Phenolen oder Phenoläthern aus einer Mischung abdestilliert wird, die als dritte Komponente ein Lösungsmittel für Wasserstoffperoxid enthält, das höher als die Phenole oder Phenoläther siedet. Bevorzugte dritte Komponente sind nach den Beispielen sowie nach den ursprünglichen Anmeldeunterlagen der DE-AS 2 410 742 und DE-AS 2 419 758, aus denen die obengenannten Schutzrechte ausgeschieden wurden, Trioctylphosphate.

Die Herstellung der einzusetzenden Wasserstoffperoxidlösungen in Trioctylphosphaten wird nicht angegeben. Es ist davon auszugehen, dass diese Lösungen analog zu der in der DE-PS 2 038 319 beschriebenen Weise hergestellt worden sind und deshalb vergleichbar hohe Restwassergehalte enthalten müssen. Dieses Restwasser geht selbstverständlich in die Dampfphase mit über.

Zudem erfordert die Herstellung der wasserfreien Lösungen von Wasserstoffperoxid in Phenolen oder Pehnoläthern nach DE-AS 2 462 957 und 2 462 990 wegen der Totalverdampfung der Phenolkomponente zusammen mit dem Wasserstoffperoxid einen hohen Energieaufwand.

Gleichzeitig treten grosse sicherheitstechnische Probleme durch die gemeinsame Anwesenheit von Wasserstoffperoxid und organischen Komponenten in der Dampfphase auf, ganz abgesehen von den Verlusten an Wasserstoffperoxid durch die Destillation.

Die Erfindung wird anhand der folgenden Beispiele näher erläutert:

Beispiel 1

Zu 421 g einer 42,74 gew.%igen Lösung von Wasserstoffperoxid in Essigsäure-iso-propylester (≙ 179,9 g $H_2O_2$) mit einem Restwassergehalt von 0,03 Gew.% werden 420,0 g Triäthylphosphat zugegeben. Man destilliert bei einem Vakuum zwischen 250–350 mbar 240,3 Essigsäure-isopropylester mit einem Gehalt von 0,01 Gew.% $H_2O_2$ ab. Die Sumpftemperatur liegt zwischen 75 und 77°C, die Kopftemperatur erreicht einen Maximalwert von 48°C. Im Sumpf verbleiben 600,0 g einer 29,91 gew.%igen wasserfreien Lösung von

$H_2O_2$ in Triäthylphosphat. Ein Restwassergehalt ist nicht mehr nachweisbar (kleiner 0,01 Gew.%), gemessen im Anschluss an die Herstellung.

Beispiel 2

Zu 250,0 g einer wasserfreien Lösung von $H_2O_2$ in Essigsäure-iso-propylester mit einem Gehalt von 44,10 Gew.% Wasserstoffperoxid und einem Restwassergehalt von 0,03 Gew.% gibt man 400,0 g Phthalsäurediäthylester zu und destilliert bei einem Vakuum von 100–50 mbar 138,7 g Essigsäure-iso-propylester über eine Kolonne ab. Die Sumpftemperatur steigt von anfangs 65°C auf 73,5°C. Die Kopftemperatur erreicht einen maximalen Wert von 29°C. Im Sumpf verbleiben 508,5 g einer 21,5 gew.%igen wasserfreien Lösung von Wasserstoffperoxid in Phthalsäurediäthylester. Ein Restwassergehalt ist nicht mehr nachweisbar (kleiner 0,01 Gew.%), gemessen wie in Beispiel 1.

Beispiel 3

Zu 363,0 g einer wasserfreien Lösung von $H_2O_2$ in Essigsäure-iso-propylester mit einem Gehalt von 42,74 Gew.% und einem Restwassergehalt von 0,03 Gew.% werden 350,0 g N-Methylpyrolidon-2 zugegeben, und man destilliert bei einem Vakuum von 400–350 mbar 207,3 g Essigsäureisopropylester über eine Kolonne ab. Der Essigsäure-iso-propylester weist einen $H_2O_2$-Gehalt von 0,05 Gew.% auf.

Die Sumpftemperatur steigt von anfangs 71°C auf 76°C, die Kopftemperatur erreicht einen maximalen Wert von 53°C. Im Sumpf verbleiben 507,0 g einer 30,5 gew.%igen Lösung von Wasserstoffperoxid in N-Methylpyrolidon. Ein Restwassergehalt ist nicht mehr nachweisbar (kleiner 0,01 Gew.%), gemessen wie in Beispiel 1.

Beispiel 4

Zu 420,0 g N-Methylpyrolidon-2 werden 250,0 g Essigsäure-iso-propylester und 257,0 g einer 70,0 gew.%igen wässrigen $H_2O_2$-Lösung (entspricht 179,9 g $H_2O_2$) zugegeben. Man destilliert bei einem Vakuum von 350–370 mbar und Kopftemperaturen von 52–56°C 77,0 g $H_2O_2$ über einen Wasserabscheider ab. Der $H_2O_2$-Gehalt des abdestillierten $H_2O$ liegt bei 0,05 Gew.%. Anschliessend wird bei 200–250 mbar der restliche Essigsäure-iso-propylester (249,6 g) abdestilliert. Der Gehalt des Esters an $H_2O_2$ beträgt $< 0,01$ Gew.%. Im Sumpf verbleiben 608,0 g einer 29,6 gew.%igen wasserfreien Lösung von $H_2O_2$ in N-Methylpyrolidon-2. Der Restwassergehalt beträgt 0,01 Gew.%, gemessen wie in Beispiel 1.

Beispiel 5

Zu 420,0 g Tetramethylharnstoff werden 395,0 g einer 45,6 gew.%igen wasserfreien Lösung von Wasserstoffperoxid in Essigsäure-iso-propylester gegeben (≙ 180,1 g $H_2O_2$ (100%ig)) mit einem Restwassergehalt von 0,03 Gew.%. Man destilliert bei einem Druck von 260–170 mbar 213,6 g Essigsäure-iso-propylester über eine Kolonne ab. Der Essigsäure-iso-propylester weist einen Wasserstoffperoxidgehalt von 0,1 Gew.% auf.

Die Sumpftemperatur steigt von anfangs 68°C auf 74°C, die Kopftemperatur erreicht einen maximalen Wert von 46°C. Im Sumpf verbleiben 598,2 g einer 29,98 gew.%igen wasserfreien Lösung von Wasserstoffperoxid in Tetramethylharnstoff. Ein Restwassergehalt ist nicht mehr nachweisbar (kleiner 0,01 Gew.%), gemessen wie in Beispiel 1.

Vergleichsbeispiel zu Beispiel 5:

Zu einer Lösung von 190,8 g Wasserstoffperoxid in 84,8 g Wasser (≙ einer 69,22 gew.%igen wässrigen Wasserstoffperoxidlösung) gibt man 449,7 g frisch destillierten Tetramethylharnstoff zu und destilliert bei einem Vakuum von 65–25 mbar 104,03 g einer 15,3 gew.%igen wässrigen $H_2O_2$-Lösung (≙ 88,0 g $H_2O$) über eine Kolonne ab. Die Sumpftemperatur steigt von anfangs 60°C auf 77,5°C, die Kopftemperatur erreicht einen maximalen Wert von 53°C. Als Rückstand erhält man 616,0 g einer 26,23 gew.%igen Lösung von $H_2O_2$ in Tetramethylharnstoff.

(Das Vergleichsbeispiel wurde nicht nach dem erfindungsgemässen Verfahren hergestellt).

**Patentansprüche**

1. Verfahren zur Herstellung wasserfreier Lösungen von Wasserstoffperoxid in höher siedenden organischen Lösungsmitteln durch Mischen von Wasserstoffperoxid mit den höher siedenden Lösungsmitteln in stetiger Gegenwart von solchen organischen Lösungsmitteln, die ein oder mehrere Azeotrope mit Wasser bilden, deren Siedepunkte unterhalb des Siedepunktes von Wasserstoffperoxid liegen, bezogen auf Normaldruck, dadurch gekennzeichnet, dass man das Wasser mit diesen tiefersiedenden Lösungsmitteln durch Azeotropbildung bei 50–400 mbar aus der Mischung bis auf 1 Gew.%, bevorzugt auf unterhalb 0,5 Gew.%, entfernt.

2. Verfahren nach Anspruch 1, dadurch gekennzeichnet, dass man als höhersiedendes Lösungsmittel Phosphorverbindungen der Formel

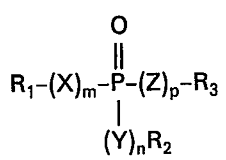

einsetzt, wobei X,Y und Z für ein O-Atom oder eine N-($C_1$–$C_8$)-Alkylgruppe bzw. für eine N-($C_4$–$C_7$)-Cycloalkylgruppe steht, ferner n, m und p die Zahl 0 oder 1 bedeuten, sowie $R_1$, $R_2$ und $R_3$ gradkettige oder verzweigte $C_1$–$C_8$-Alkyl- bzw. $C_4$–$C_6$-Cycloalkylreste darstellen, die gegebenenfalls durch Halogen, Hydroxyl-, $C_1$–$C_4$-Alkoxy, CN-, oder Phenylgruppen substituiert sein können.

3. Verfahren nach Anspruch 1 und 2, dadurch gekennzeichnet, dass man Trialkylphosphate mit $C_1$–$C_8$-Alkylgruppen, bevorzugt Triäthylphosphat, als höhersiedende Lösungsmittel einsetzt.

4. Verfahren nach Anspruch 1, dadurch gekennzeichnet, dass man als höhersiedendes Lösungsmittel Ester aromatischer Carbonsäuren gemäss der Strukturformel

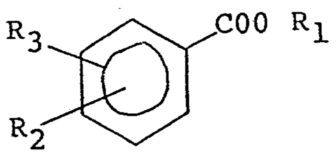

einsetzt, worin $R_1$ die Gruppierung $CH_3$, $C_2H_5$, $n\text{-}C_3H_7$, $i\text{-}C_3H_7$, $n\text{-}C_4H_9$, $i\text{-}C_4H_9$, tert. $C_4H_9$, sek. $C_4H_9$, $R_2$ und $R_3$ gegenüber Wasserstoffperoxid inerte Substituenten wie H, Cl, F, Alkyl wie $R_1$, $CH_3O$, $C_2H_5O$, COO $R_4$ ($R_4 = R_1$) bedeuten und $R_2$ und $R_3$ in beliebigen Positionen zur COO $R_1$-Gruppierung stehen kann.

5. Verfahren nach Anspruch 4, dadurch gekennzeichnet, dass man Phthalsäureester, bevorzugt Phthalsäurediäthylester, als höhersiedendes Lösungsmittel einsetzt.

6. Verfahren nach Anspruch 1, dadurch gekennzeichnet, dass man als höhersiedendes Lösungsmittel Carbonsäureamide, respective Lactame der allgemeinen Formel

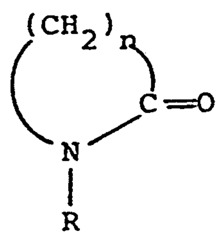

einsetzt, in der R einen gradkettigen oder verzweigten $C_1$–$C_4$-Alkylrest bedeutet, der gegebenenfalls durch Halogen, Hydroxyl- oder $C_1$–$C_3$-Alkylreste substituiert sein kann, und n die Zahl 2 bis 5 bedeutet.

7. Verfahren nach Anspruch 6, dadurch gekennzeichnet, dass man N-Alkylpyrolidone mit $C_1$–$C_4$-Alkylgruppen, bevorzugt N-Methylpyrolidon, verwendet.

8. Verfahren nach Anspruch 1, dadurch gekennzeichnet, dass man als höhersiedendes Lösungsmittel tetrasubstituierte Harnstoffe der Formel

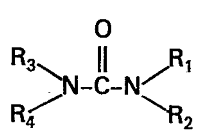

in der $R_1$, $R_2$, $R_3$ und $R_4$ $C_1$–$C_6$-Alkylgruppen bedeuten, einsetzt, wobei Harnstoffe, bei denen $R_1$, $R_2$, $R_3$ und $R_4$ einander gleich sind, bevorzugt verwendet werden.

9. Verfahren nach Anspruch 8, dadurch gekennzeichnet, dass man als höhersiedendes Lösungsmittel Tetramethyl-, Tetraäthyl- oder Tetrabutylharnstoff verwendet.

## Claims

1. A process for the production of anhydrous solutions of hydrogen peroxide in higher boiling point organic solvents by mixing hydrogen peroxide with the higher boiling point solvents in the continous presence of those organic solvents which form, with water, one or more azeotropes, the boiling points of which lie below the boiling point of hydrogen peroxide, with respect to normal pressure, characterised in that the water is removed from the mixture down to 1% by weight, preferably to below 0.5% by weight, with these lower boiling point solvents by azeotrope formation at from 50 to 400 mbar.

2. A process according to claim 1, characterised in that phosphorus compounds corresponding to the formula

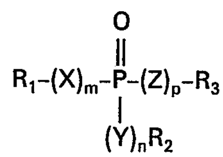

wherein X, Y and Z represent a O-Atom or a N-($C_1$–$C_8$)-alkyl group or a N-($C_4$–$C_7$)-cycloalkyl group, also n, m and p represent the number 0 or 1, and $R_1$, $R_2$ and $R_3$ represent straight chained or branched $C_1$–$C_8$-alkyl or $C_4$–$C_6$-cycloalkyl radicals which may optionally be substituted by halogen, hydroxyl, $C_1$–$C_4$-alkoxy, CN-, or phenyl groups, are used as higher boiling point solvent.

3. A process according to claims 1 and 2, characterised in that trialkyl phosphates containing $C_1$–$C_8$-alkyl groups, preferably triethyl phosphate are used as higher boiling point solvents.

4. A process according to claim 1, characterised in that esters of aromatic carboxylic acids corresponding to the structural formula

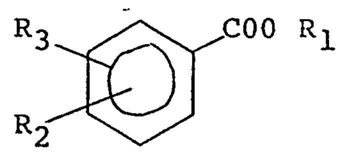

wherein $R_1$ represents the grouping $CH_3$, $C_2H_5$, $n\text{-}C_3H_7$, $i\text{-}C_3H_7$, $n\text{-}C_4H_9$, $i\text{-}C_4H_9$, tert. $C_4H_9$, sec. $C_4H_9$, $R_2$ and $R_3$ represent substituents such as H, Cl, F, alkyl such as $R_1$, $CH_3O$, $C_2H_5O$, $COOR_4$ ($R_4 = R_1$) which are inert towards hydrogen peroxide, and $R_2$ and $R_3$ can stand in any position relative to the COO $R_1$ grouping, are used as higher boiling point solvent.

5. A process according to claim 4, characterised in that phthalic acid esters, preferably phthalic acid diethyl ester, are used as higher boiling point solvent.

6. A process according to claim 1, characterised in that carboxylic acid amides or lactams corresponding to the general formula

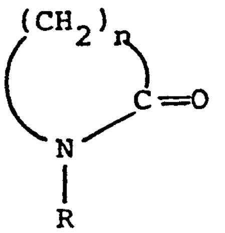

in which R represents a straight-chained or branched $C_1$–$C_4$-alkyl radical which may optionally be substituted by halogen, hydroxyl or $C_1$–$C_3$-alkyl radicals and n represents the number 2 to 5, are used as higher boiling point solvent.

7. A process according to claim 6, characterised in that N-alkyl pyrrolidones containing $C_1$–$C_4$-alkyl groups, preferably N-methyl pyrrolidone are used.

8. A process according to claim 1, characterised in that tetrasubstituted ureas corresponding to the formula

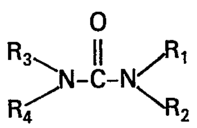

in which $R_1$, $R_2$, $R_3$ and $R_4$ represent $C_1$–$C_6$-alkyl groups are used as higher boiling point solvents, ureas in which $R_1$, $R_2$, $R_3$ and $R_4$ are identical to one another preferably being used.

9. A process according to claim 8, characterised in that tetramethyl, tetraethyl or tetrabutyl urea is used as higher boiling point solvent.

**Revendications**

1. Procédé pour la préparation de solutions anhydres de peroxyde d'hydrogène dans des solvants organiques à hauts points d'ébullition, par mélange de peroxyde d'hydrogène avec les solvants à hauts points d'ébullition, en présence permanente de solvants organiques qui forment un ou plusieurs azéotropes avec l'eau, et dont les points d'ébullition sont inférieurs au point d'ébullition du peroxyde d'hydrogène, caractérisé en ce que l'on élimine avec ces solvants à bas points d'ébullition l'eau hors du mélange jusqu'à 1% en poids, de préférence jusqu'à moins de 0,5% en poids, par formation d'un azéotrope, à 50–400 mbar.

2. Procédé selon la revendication 1, caractérisé en ce que l'on utilise en tant que solvant à haut point d'ébullition des composés phosphorés de formule

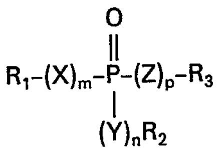

dans laquelle X, Y et Z représentent un atome d'oxygène ou un groupe n-alkyle en $C_1$–$C_8$, ou un groupe n-cycloalkyle en $C_4$–$C_7$, en outre n, m et p représentent le nombre 0 ou 1, et $R_1$, $R_2$ et $R_3$ représentent des radicaux alkyle en $C_1$–$C_8$ ou cycloalkyle en $C_4$–$C_6$, à chaîne droite ou ramifiée, qui peuvent éventuellement être substitués par des atomes d'halogène ou par un groupe hydroxyle, alkoxy en $C_1$–$C_4$, CN ou phényle.

3. Procédé selon la revendication 1 ou 2, caractérisé en ce que l'on utilise en tant que solvants à hauts points d'ébullition des phosphate de trialkyle, de préférence le phosphate de triéthyle.

4. Procédé selon la revendication 1, caractérisé en ce que l'on utilise en tant que solvant à haut point d'ébullition des esters d'acides carboxyliques aromatiques de formule développée

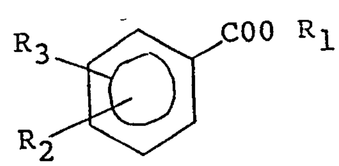

dans laquelle $R_1$ représente le groupement $CH_3$, $C_2H_5$, n-$C_3H_7$, i-$C_3H_7$, n-$C_4H_9$, i-$C_4H_9$, tert. $C_4H_9$, sec. $C_4H_9$, $R_2$ et $R_3$ représentent des substituants inertes vis-à-vis du peroxyde d'hydrogène, tels que H, Cl, F, des groupes alkyle tels que $R_1$, $CH_3O$, $C_2H_5O$, COO $R_4$ ($R_4$ = $R_1$), et $R_2$ et $R_3$ peuvent se trouver en positions quelconques par rapport ou groupement COO $R_1$.

5. Procédé selon la revendication 4, caractérisé en ce que l'on utilise comme solvant à haut point d'ébullition des esters phtaliques, de préférence le phtalate de diéthyle.

6. Procédé selon la revendication 1, caractérisé en ce que l'on utilise comme solvant à haut point d'ébullition des amides d'acides carboxyliques, en particulier des lactames, de formule générale

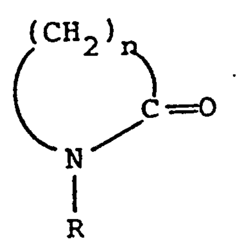

dans laquelle R représente un radical alkyle en $C_1$–$C_4$, à chaîne droite ou ramifiée, qui peut éventuellement être substitué par un atome d'halogène ou par des groupes hydroxyle ou alkyle en $C_1$–$C_3$, et n représente un nombre allant de 1 à 5.

7. Procédé selon la revendication 6, caractérisé en ce que ce que l'on utilise des N-alkylpyrrolidones comportant des groupes alkyle en $C_1$–$C_4$, de préférence la N-méthylpyrrolidone.

8. Procédé selon la revendication 1, caractérisé en ce que l'on utilise comme solvant à haut point d'ébullition des urées tétrasubstituées de formule

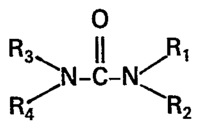

dans laquelle $R_1$, $R_2$, $R_3$ et $R_4$ représentent des groupes alkyle en $C_1$–$C_6$, ou les urées dans lesquelles $R_1$, $R_2$, $R_2$ et $R_4$ sont identiques, sont utilisées de préférence.

9. Procédé selon la revendication 8, caractérisé en ce que l'on utilise comme solvant à haut point d'ébullition la tétraméthylurée, la tétraéthylurée ou la tétrabutylurée.